# EUROPÄISCHE PATENTANMELDUNG

(11) **EP 4 687 226 A1**
(43) Veröffentlichungstag der Anmeldung: **04.02.2026**
(21) Anmeldenummer: 25192322.3
(22) Anmeldetag: 29.07.2025
(51) Int. Cl.: H01R 11/32, H01R 13/52, H01R 24/20, H01R 24/28, H01R 31/02

(54) **STECKVERBINDER**

(30) Priorität: 29.07.2024 DE 102024121512
(71) Anmelder: LEONI Bordnetz-Systeme GmbH, 97318 Kitzingen (DE)
(72) Erfinder: KAIN, Stefan, 97273 Kürnach (DE)
(74) Vertreter: Frenkel, Matthias Alexander

(57) **Zusammenfassung**

Die Erfindung bezieht sich auf einen Steckverbinder zur Verbindung von Leitungen in einem Leitungssatz für ein Fahrzeug sowie auf einen Leitungssatz mit einem solchen Steckverbinder. Ein Ausführungsbeispiel des Steckverbinders (10) weist ein erstes Steckerteil (100) und ein zweites Steckerteil (200) auf. Das erste Steckerteil (100) weist ein erstes Gehäuseteil (120) und eine innerhalb des ersten Gehäuseteils (120) angeordnete erste Kontaktierungsanordnung (160) auf. Das zweite Steckerteil (200) weist ein zweites Gehäuseteil (220) und eine innerhalb des zweiten Gehäuseteils (220) angeordnete zweite Kontaktierungsanordnung (260) auf. Das erste Gehäuseteil (120) und das zweite Gehäuseteil (220) sind zumindest abschnittsweise derart lösbar ineinander einführbar sind, dass die erste Kontaktierungsanordnung (160) mit der zweiten Kontaktierungsanordnung (260) eine lösbare elektrische Verbindung eingeht.

## Beschreibung

Die Erfindung betrifft allgemein die Verbindung von elektrischen Leitungen. Im Speziellen bezieht sich die Erfindung auf einen Steckverbinder zur Verbindung von Leitungen in einem Leitungssatz für ein Fahrzeug sowie auf einen Leitungssatz mit einem solchen Steckverbinder.

Die Stromversorgung von Bauteilen in einem Bordnetz unterliegt verschiedenen Limitierungen. Aufgrund der immer größer werdenden Anzahl von Sensoren, Steuergeräten, Anzeigeelementen etc. wird die Stromversorgung gebildet durch ein weitverzweigtes Netz von Leitern, Adern, Litzen, Kabeln oder Ähnlichem. Es ergibt sich eine Baumstruktur mit Verzweigungen zu den jeweiligen Teilnehmern oder Komponenten. Damit steigt der Verdrahtungsaufwand stetig, je verzweigter die Netzstruktur ausgebildet ist. Für gewöhnlich ist der Verbindungsaufwand erheblich. Zudem ist die gebildete Verdrahtung unflexibel.

In Hochvolt-Bordnetzen werden Hochvolt-Verteilungen derzeit in Form von Mehrfachverteilern, wie Y-Verteilen oder anderen Verteilergeometrien, über eine feste Verbindung innerhalb des Hoch-Bordnetzes vorgenommen. Die Komponenten sind meistens in einen Nebenaggregateleitungssatz oder mehrere Nebenaggregateleitungssätze eingebunden und werden in diesem fest konfektioniert.

Die EP 2 915 171 A1 betrifft eine Vorrichtung und ein Verfahren zum Spleißen abgeschirmter Drahtkabel. Es wird eine Drahtkabelanordnung mit einer Vielzahl von abgeschirmten Drahtkabeln beschrieben, die miteinander verspleißt sind. Die Zentralleiter werden miteinander verbunden und in einem gemeinsamen Isolator aufgenommen.

Es besteht ein Bedarf an einem verbesserten Ansatz zur Verbindung von Leitungen in einem Leitungssatz für ein Fahrzeug. Insbesondere besteht ein Bedarf an einem flexibler verbindbaren und/oder kleineren und/oder leichteren Leitungssatz für ein Fahrzeug.

Gemäß einem ersten Aspekt wird ein Steckverbinder zur Verbindung von Leitungen in einem Leitungssatz für ein Fahrzeug vorgeschlagen. Der Steckverbinder weist ein erstes Steckerteil und ein zweites Steckerteil auf. Das erste Steckerteil weist ein erstes Gehäuseteil auf. Das erste Steckerteil weist eine innerhalb des ersten Gehäuseteils angeordnete erste Kontaktierungsanordnung auf. Die erste Kontaktierungsanordnung ist ausgebildet, eine elektrische Kontaktierung mit mindestens einer ersten elektrischen Leitung herzustellen. Das zweite Steckerteil weist ein zweites Gehäuseteil auf. Das zweite Steckerteil weist eine innerhalb des zweiten Gehäuseteils angeordnete zweite Kontaktierungsanordnung auf. Die zweite Kontaktierungsanordnung ist ausgebildet, eine elektrische Kontaktierung mit mindestens zwei zweiten elektrischen Leitungen herzustellen. Das erste Gehäuseteil und das zweite Gehäuseteil sind zumindest abschnittsweise derart lösbar ineinander einführbar, dass die erste Kontaktierungsanordnung mit der zweiten Kontaktierungsanordnung eine lösbare elektrische Verbindung eingeht oder herstellt.

Unter einer lösbaren Verbindung kann insbesondere verstanden werden, dass die lösbare Verbindung und/oder über die lösbare Verbindung verbundene Elemente oder Komponenten mit normalem Kraftaufwand und/oder zerstörungsfrei gelöst werden kann/können. Lösbare Verbindungen können sozusagen ohne Beschädigung und/oder Zerstörung der verbundenen Bauteile getrennt und erneut fixiert werden. Lösbare Verbindungen umfassen Bauelemente/Bauteile, die ohne Zerstörung der verbundenen Bauelemente/Bauteile und mindestens eines Verbindungselements getrennt und wieder zusammengefügt werden können.

Somit können das erste Gehäuseteil und das zweite Gehäuseteil zumindest abschnittsweise ineinander eingeführt, wieder voneinander gelöst und wieder zumindest abschnittsweise ineinander eingeführt werden usw. Ferner können die erste Kontaktierungsanordnung und die zweite Kontaktierungsanordnung elektrisch miteinander verbunden, wieder voneinander getrennt und wiederum miteinander verbunden werden usw.

Mittels des Steckverbinders können Leitungen somit flexibel miteinander verbunden, voneinander getrennt und wieder oder neu verbunden werden. Somit kann Installationsaufwand bei der Verdrahtung und/oder bei der Erstellung eines Leitungssatzes verringert werden. Ferner können Leitungen flexibel miteinander verbunden werden. Ein Leitungssatz kann daher flexibel erstellt und/oder umgestaltet werden. Dies ist insbesondere bei der Montage des Leitungssatzes/Kabelsatzes in einem Kraftfahrzeug, z. B. einem Automobil, von Vorteil. Ferner ermöglicht dies, u. a. aufgrund kleinerer Teilleitungssätze/Teilkabelsätze, eine automatisierte Fertigung bzw. Montage des Leitungssatzes/Kabelsatzes.

Die elektrischen Leitungen können auch als Leitungen oder Kabel oder elektrische Kabel bezeichnet werden. Die Leitungen können jeweils mindestens eine elektrisch leitfähige Ader oder einen leitfähigen Kern aufweisen. Die Leitungen können jeweils als eine Single-Core-Leitung ausgebildet sein. Die Leitungen können jeweils mindestens eine Isolation aufweisen. Die Leitungen oder Kabel können eine oder mehrere Adern aufweisen, über die Energie und/oder Informationen übertragen werden kann/können.

Der Steckverbinder kann zudem als Leitungs-Verteiler dienen. Ist beispielsweise die Anzahl der mindestens einen ersten Leitung unterschiedlich von der Anzahl der mindestens einen zweiten Leitung kann der Steckverbinder beispielsweise als Y-Verteiler dienen. Als einfache Beispiele hierfür seien an dieser Stelle eine Anzahl von genau einer einzigen ersten Leitung und genau zwei zweiten Leitungen oder eine Anzahl von genau zwei ersten Leitungen und genau vier zweiten Leitungen genannt.

Mehrere Leitungen oder Kabel bilden den Leitungssatz. Der Leitungssatz kann auch als Kabelbaum oder Kabelsatz oder Bordnetz bezeichnet werden. Der Leitungssatz eines Fahrzeugs verbindet für gewöhnlich mehrere, insbesondere alle, elektrische und/oder elektronische Komponenten (z. B. Antriebe, Aktoren, Sensoren, Displays, Steuergeräte, Energiequellen etc.) in einem Fahrzeug.

Das erste Steckerteil kann als männliches Steckerteil ausgebildet sein. Das zweite Steckerteil kann als weibliches Steckerteil ausgebildet sein. In diesem Fall kann zumindest ein Abschnitt des ersten Gehäuseteils in zumindest einen Abschnitt des zweiten Gehäuseteils einführbar oder einbringbar sein. Alternativ kann das erste Steckerteil als weibliches Steckerteil und das zweite Steckerteil als männliches Steckerteil ausgebildet sein. In diesem Fall kann zumindest ein Abschnitt des zweiten Gehäuseteils in zumindest einen Abschnitt des ersten Gehäuseteils einführbar oder einbringbar sein.

Das erste Steckerteil kann eine innerhalb des ersten Gehäuseteils angeordnete erste Fixieranordnung aufweisen. Die erste Fixieranordnung kann ausgebildet sein, mit der mindestens einen ersten elektrischen Leitung eine erste Verbindung einzugehen. Die erste Verbindung kann eine erste formschlüssige und/oder kraftschlüssige und/oder stoffschlüssige Verbindung aufweisen oder als erste formschlüssige und/oder kraftschlüssige und/oder stoffschlüssige Verbindung ausgebildet sein. Die erste Fixieranordnung kann als eine von der ersten Kontaktierungsanordnung separate / getrennte Anordnung / Komponente ausgebildet sein. Alternativ kann die erste Fixieranordnung mit der ersten Kontaktierungsanordnung an einer gemeinsamen Anordnung ausgebildet sein.

Das zweite Steckerteil kann eine innerhalb des zweiten Gehäuseteils angeordnete zweite Fixieranordnung aufweisen. Die zweite Fixieranordnung kann ausgebildet sein, mit den mindestens zwei zweiten elektrischen Leitungen eine zweite Verbindung einzugehen. Die zweite Verbindung kann eine zweite formschlüssige und/oder kraftschlüssige und/oder stoffschlüssige Verbindung aufweisen oder als zweite formschlüssige und/oder kraftschlüssige und/oder stoffschlüssige Verbindung ausgebildet sein. Die zweite Fixieranordnung kann als eine von der zweiten Kontaktierungsanordnung separate / getrennte Anordnung / Komponente ausgebildet sein. Alternativ kann die zweite Fixieranordnung mit der zweiten Kontaktierungsanordnung an einer gemeinsamen Anordnung ausgebildet sein.

Die erste formschlüssige und/oder kraftschlüssige Verbindung kann eine Crimpverbindung oder Pressverbindung aufweisen oder als eine Crimpverbindung oder Pressverbindung ausgebildet sein. Die erste stoffschlüssige Verbindung kann eine Schweißverbindung aufweisen oder als eine Schweißverbindung ausgebildet sein. Zusätzlich oder alternativ kann die zweite formschlüssige und/oder kraftschlüssige Verbindung eine Crimpverbindung oder Pressverbindung aufweisen oder als eine Crimpverbindung oder Pressverbindung ausgebildet sein. Die zweite stoffschlüssige Verbindung kann eine Schweißverbindung aufweisen oder als eine Schweißverbindung ausgebildet sein. Die Schweißverbindung kann über ein Ultraschall- und/oder Reibschweißverfahren hergestellt werden. Unter Crimpen kann ein Verbindungs- oder Fügeverfahren verstanden werden, bei dem zwei Komponenten durch plastische Verformung miteinander verbunden werden, beispielsweise durch Bördeln, Quetschen, Kräuseln oder Falten. Eine Crimpverbindung ist nur bedingt lösbar, insbesondere nach dem Lösen nicht wieder verbindbar.

Die erste Fixieranordnung kann mindestens einen ersten hülsenförmigen Abschnitt aufweisen. Der mindestens eine erste hülsenförmige Abschnitt kann ausgebildet sein, über eine auf die mindestens eine erste Leitung aufgebrachte mindestens eine erste Unterziehhülse, die erste formschlüssige Verbindung zu bilden/einzugehen. Der mindestens eine erste hülsenförmige Abschnitt kann insbesondere mindestens eine erste Überziehhülse aufweisen oder als mindestens eine erste Überziehhülse ausgebildet sein. Beispielsweise kann die mindestens eine erste Überziehhülse nicht unmittelbar auf die mindestens eine erste Unterziehhülse aufgebracht sein, sondern auf mindestens eine über der mindestens einen ersten Unterziehhülse liegende erste Leitungsschirmung / Kabelschirmung der mindestens einen ersten Leitung. Zusätzlich oder alternativ kann die zweite Fixieranordnung mindestens zwei zweite hülsenförmige Abschnitte aufweisen. Die mindestens zwei zweiten hülsenförmigen Abschnitte können ausgebildet sein, über jeweils eine auf die mindestens zwei zweiten Leitungen aufgebrachte mindestens zwei zweite Unterziehhülsen, die zweite formschlüssige Verbindung zu bilden/einzugehen. Die mindestens zwei zweiten hülsenförmigen Abschnitte können insbesondere mindestens zwei zweite Überziehhülsen aufweisen oder als mindestens zwei zweite Überziehhülsen ausgebildet sein. Beispielsweise können die mindestens zwei zweiten Überziehhülsen nicht unmittelbar auf die mindestens zwei zweiten Unterziehhülsen aufgebracht sein, sondern auf eine jeweils über den mindestens zwei zweiten Unterziehhülsen liegende zweite Leitungsschirmung / Kabelschirmung der mindestens einen ersten Leitung. Die mindestens zwei zweiten hülsenförmigen Abschnitte können getrennt voneinander vorgesehen sein oder können als ein gemeinsames Element miteinander verbunden sein. Jeder der zwei zweiten hülsenförmigen Abschnitte kann auf jeweils eine der mindestens zwei zweiten Unterziehhülsen aufgebracht werden. Die mindestens zwei Unterziehhülsen können ihre zugehörige zweite Leitung jeweils vollständig umfänglich umgeben. Der mindestens eine erste hülsenförmige Abschnitt und/oder die mindestens zwei zweiten hülsenförmigen Abschnitte können zusätzlich gequetscht oder gedrückt oder gepresst werden, um die entsprechende beispielswiese formschlüssige Verbindung zu bilden/einzugehen.

Der Steckverbinder kann ferner eine auf das erste Gehäuseteil aufgebrachte erste Dichtanordnung oder Abdichtanordnung mit mindestens einer Öffnung zur Aufnahme der mindestens einen ersten elektrischen Leitung aufweisen. Die erste Dichtanordnung kann an einem Ende des ersten Gehäuseteils aufgebracht sein, welches dem Abschnitt gegenüberliegt, über welchen das erste Gehäuseteil und das zweite Gehäuseteil abschnittsweise ineinander einführbar oder einbringbar sind. Der Steckverbinder kann eine auf das zweite Gehäuseteil aufgebrachte zweite Dichtanordnung oder Abdichtanordnung mit mindestens zwei Öffnungen zur Aufnahme der mindestens zwei zweiten elektrischen Leitungen aufweisen. Die zweite Dichtanordnung kann an einem Ende des Gehäuseteils aufgebracht sein, welches dem Abschnitt gegenüberliegt, über welchen das erste Gehäuseteil und das zweite Gehäuseteil abschnittsweise ineinander einführbar oder einbringbar sind.

Der Steckverbinder kann ferner eine in dem ersten Gehäuseteil angeordnete erste Schirmungsanordnung aufweisen. Die erste Schirmungsanordnung kann ausgebildet sein, zumindest die erste Kontaktierungsanordnung abzuschirmen oder abzudecken. Die erste Schirmungsanordnung kann eine elektromagnetische Abschirmung, z. B. eine EMV/EMC-Abschirmung aufweisen, oder als eine elektromagnetische Abschirmung, z. B. eine EMV/EMC Abschirmung, ausgebildet sein (EMV: elektromagnetische Verträglichkeit; EMC: electromagnetic compatibility). Zusätzlich oder alternativ kann der Steckverbinder eine in dem zweiten Gehäuseteil angeordnete zweite Schirmungsanordnung aufweisen. Die zweite Schirmungsanordnung kann ausgebildet sein, zumindest die zweite Kontaktierungsanordnung abzuschirmen oder abzudecken. Die zweite Schirmungsanordnung kann eine elektromagnetische Abschirmung, z. B. eine EMV/EMC-Abschirmung aufweisen, oder als eine elektromagnetische Abschirmung, z. B. eine EMV/EMC Abschirmung, ausgebildet sein.

Das erste Steckerteil und/oder das zweite Steckerteil kann/können ein Kopfteil aufweisen oder bilden. Anders ausgedrückt, das Kopfteil kann durch das erste Steckerteil und/oder das zweite Steckerteil gebildet sein/werden. Alternativ kann das Kopfteil ein von dem ersten Steckerteil und/oder dem zweiten Steckerteil separates Element sein. Das Kopfteil kann ausgebildet sein, mit einer elektrischen Komponente verbunden zu werden. Das Kopfteil kann eine, insbesondere zumindest nahezu plane/ebene, Anlagefläche aufweisen. Das Kopfteil kann ein von dem ersten und/oder zweiten Gehäuseteil separates Element sein. Das erste und/oder zweite Gehäuseteil kann das Kopfteil aufweisen.

Gemäß einem zweiten Aspekt wird ein Leitungssatz für ein Fahrzeug vorgeschlagen. Der Leitungssatz weist mindestens eine erste Leitung auf. Der Leitungssatz weist mindestens zwei zweite Leitungen auf. Der Leitungssatz weist mindestens einen Steckverbinder gemäß dem ersten Aspekt auf.

Das erste Steckerteil des mindestens einen Steckverbinders kann mit der mindestens einen ersten Leitung verbunden sein. Das erste Steckerteil des mindestens einen Steckverbinders kann mit der mindestens einen ersten Leitung beispielsweise formschlüssig und/oder kraftschlüssig und/oder stoffschlüssig verbunden sein. Insbesondere kann eine erste Fixieranordnung des ersten Steckerteils des mindestens einen Steckverbinders mit der mindestens einen ersten Leitung beispielsweise formschlüssig und/oder kraftschlüssig und/oder stoffschlüssig, verbunden sein. Ferner kann zumindest ein Teil der ersten Fixieranordnung mit dem ersten Gehäuseteil formschlüssig verbunden sein. Das zweite Steckerteil des mindestens einen Steckverbinders kann mit den mindestens zwei zweiten Leitungen verbunden sein. Das zweite Steckerteil des mindestens einen Steckverbinders kann mit den mindestens zwei zweiten Leitungen beispielsweise formschlüssig und/oder kraftschlüssig und/oder stoffschlüssig verbunden sein. Insbesondere kann eine zweite Fixieranordnung des zweiten Steckerteils des mindestens einen Steckverbinders mit den mindestens zwei zweiten Leitungen beispielsweise formschlüssig und/oder kraftschlüssig und/oder stoffschlüssig verbunden sein. Ferner kann zumindest ein Teil der zweiten Fixieranordnung mit dem zweiten Gehäuseteil formschlüssig verbunden sein.

Die mindestens eine erste Leitung kann als mindestens eine geschirmte oder ungeschirmte Hochvolt-Leitung ausgebildet sein. Zusätzlich oder alternativ können die mindestens zwei zweiten Leitungen als mindestens zwei geschirmte oder ungeschirmte Hochvolt-Leitungen ausgebildet sein.

Der Leitungssatz kann mindestens eine mit dem Leistungssatz verbundene Hochvolt-Energiequelle oder Hochvolt-Energieversorgung, beispielsweise einen Hochvolt-Speicher oder eine Hochvolt-Batterie oder einen Hochvolt-Akkumulator, aufweisen. Der Leitungssatz kann mehrere mit dem Leitungssatz verbundene elektrische und/oder elektronische Komponenten aufweisen.

Der Leitungssatz kann eine Vielzahl von Steckverbindern aufweisen. Anders ausgedrückt, es kann eine Vielzahl von Steckverbindern in dem Leitungssatz vorgesehen sein. Die ersten Steckerteile und die zweiten Steckerteile der Vielzahl von Steckverbinder können jeweils lösbar miteinander verbindbar sein. Anders ausgedrückt, die ersten und zweiten Steckerteile können jeweils miteinander kompatibel sein. Auf diese Weise können flexibel, insbesondere beliebig, verschiedene Steckerteile miteinander verbunden werden. Dadurch können nicht nur die Steckverbinder neu kombiniert, sondern vielmehr kann der Leitungssatz flexibel erstellt und/oder angepasst werden.

Mehrere der Vielzahl von Steckverbindern können eine abweichende Anzahl von Eingangsleitungen und Ausgangsleitungen aufweisen.

Ein Steckerteil eines ersten der mehreren der Vielzahl von Steckverbindern kann mit einem zugehörigen Gegensteckerteil eines zweiten der mehreren der Vielzahl von Steckverbindern und einem zugehörigen Gegensteckerteil eines dritten der mehreren der Vielzahl von Steckverbindern verbindbar sein. Auf diese Weise kann der Leitungssatz flexibel angepasst werden.

Gemäß einem Beispiel kann ein Steckerteil eines der mehreren der Vielzahl von Steckverbindern mit einem zugehörigen Gegensteckerteil jedes der mehreren der Vielzahl von Steckverbindern verbindbar sein. Auf diese Weise kann der Leitungssatz beliebig angepasst werden.

Auch wenn einige der voranstehend beschriebenen Aspekte in Bezug auf den Steckverbinder gemäß dem ersten Aspekt beschrieben wurden, so können diese Aspekte auch in entsprechender Weise in dem Leitungssatz gemäß dem zweiten Aspekt realisiert sein/werden und umgekehrt.

Die vorliegende Erfindung soll anhand von Figuren weiter erläutert werden. Diese Figuren zeigen schematisch:
- Figur 1a: ein Ausführungsbeispiel eines Steckverbinders in einem unverbundenen Zustand in einer ersten Ansicht;
- Figur 1b: ein Ausführungsbeispiel eines Steckverbinders in einem unverbundenen Zustand in einer zweiten Ansicht;
- Figur 1c: ein Ausführungsbeispiel eines Steckverbinders in einem verbundenen Zustand;
- Figur 2a: Details des Steckverbinders aus Figuren 1a bis 1c;
- Figur 2b: weitere Details des Steckverbinders aus Figuren 1a bis 1c;
- Figur 3: ein Ausführungsbeispiel eines Leitungssatzes mit mehreren Steckverbindern aus Figuren 1a bis 1c;
- Figur 4a: Details eines Steckverbinders gemäß einer Variante des Ausführungsbeispiels aus Figuren 1a bis 1c;
- Figur 4b: eine andere Ansicht der Variante aus Figur 4a; und
- Figur 5: ein Ausführungsbeispiel eines Leitungssatzes mit einem Steckverbinder aus Figuren 4a und 4b.

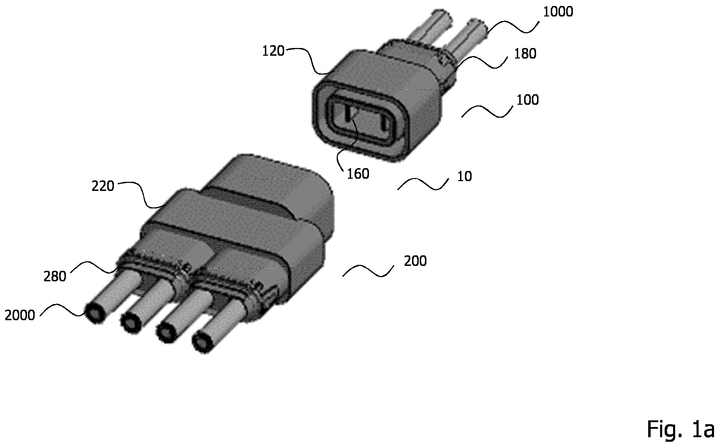

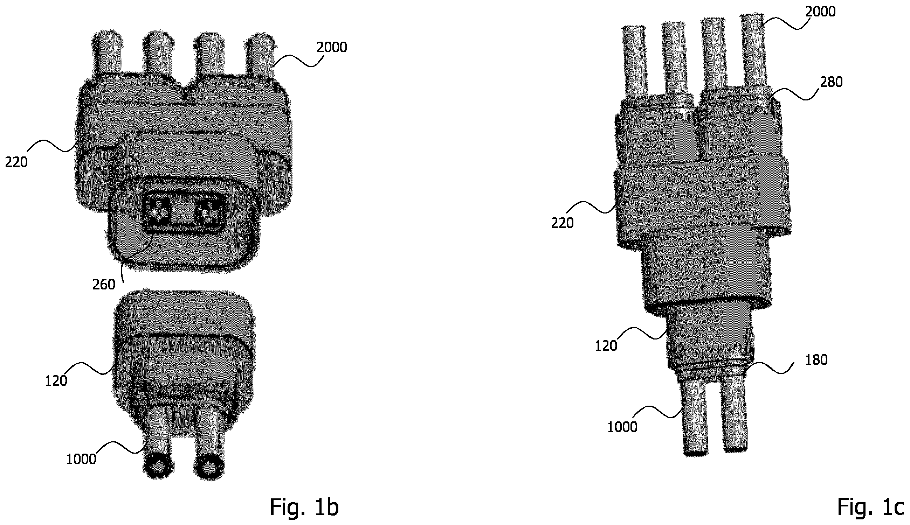

In Figuren 1a, 1b und 1c ist schematisch ein Steckverbinder 10 gemäß einem Ausführungsbeispiel gezeigt. Der Steckverbinder 10 dient zur Verbindung von Leitungen in einem Leitungssatz für ein Fahrzeug. In den Figuren 1a und 1b ist der Steckverbinder 10 in einem nicht verbundenen / getrennten Zustand gezeigt. In Figur 1c ist der Steckverbinder 10 in einem verbundenen Zustand gezeigt.

Der Steckverbinder 10 weist ein erstes Steckerteil 100 auf. Der Steckverbinder 10 weist ein zweites Steckerteil 200 auf. Das erste Steckerteil 100 weist ein erstes Gehäuseteil 120 auf. In Figur 1a sind beispielhaft zwei erste Leitungen 1000 als Beispiel für mindestens eine erste elektrische Leitung 1000 gezeigt. Das erste Steckerteil 100 weist eine innerhalb des ersten Gehäuseteils 120 angeordnete erste Kontaktierungsanordnung 160 auf. In Figur 1a ist die Kontaktierungsanordnung 160 teilweise zu erkennen. Genauer gesagt, sind zwei Vorsprünge der Kontaktierungsanordnung 160 zu erkennen, von denen der linke Vorsprung der Kontaktierungsanordnung 160 mit einem Bezugszeichen versehen ist. Die Vorsprünge der Kontaktierungsanordnung 160 erstrecken sich nach vorne in Richtung des zweiten Steckerteils 120, stehen, in dem gezeigten Beispiel, jedoch nicht aus dem Gehäuseteil 120 hervor oder heraus. Anders ausgedrückt, die Kontaktierungsanordnung 160 ist in dem gezeigten Beispiel vollständig in dem ersten Gehäuseteil 120 angeordnet/aufgenommen. Die Kontaktierungsanordnung 160 ist ausgebildet, eine elektrische Kontaktierung mit der mindestens einen ersten elektrischen Leitung 1000 herzustellen. Ein Teil der Kontaktierungsanordnung 160, der die elektrische Kontaktierung mit der mindestens einen elektrischen Leitung 1000 eingeht, ist in Figur 1a nicht zu erkennen, da vollständig von dem Gehäuseteil 120 verborgen/aufgenommen. Die elektrische Kontaktierung wird innerhalb des ersten Gehäuseteils 120 hergestellt und ist daher in Figur 1a nicht zu erkennen.

Das erste Steckerteil 100 kann ferner eine innerhalb des ersten Gehäuseteils 120 angeordnete erste Fixieranordnung aufweisen. Die erste Fixieranordnung ist in Figur 1a nicht zu erkennen, da sie innerhalb des ersten Gehäuseteils angeordnet ist. Die erste Fixieranordnung ist ausgebildet, mit der mindestens einen ersten Leitung 1000 eine erste Verbindung einzugehen, beispielsweise eine formschlüssige und/oder kraftschlüssige und/oder stoffschlüssige Verbindung.

Das zweite Steckerteil 200 weist ein zweites Gehäuseteil 220 auf. In Figur 1a sind beispielhaft vier zweite Leitungen 2000 als Beispiel für mindestens zwei zweite elektrische Leitungen 2000 gezeigt. Das zweite Steckerteil 200 weist eine innerhalb des zweiten Gehäuseteils 220 angeordnete zweite Kontaktierungsanordnung auf. Die zweite Kontaktierungsanordnung ist in Figur 1a aufgrund der Darstellung des zweiten Steckerteils 200 nicht zu erkennen. Die zweite Kontaktierungsanordnung ist ausgebildet, eine elektrische Kontaktierung mit den mindestens zwei zweiten elektrischen Leitungen 2000 herzustellen. Die elektrische Kontaktierung ist in Figur 1a nicht zu erkennen, da sie innerhalb des zweiten Gehäuseteils 220 hergestellt wird.

Das zweite Steckerteil 200 kann ferner eine innerhalb des zweiten Gehäuseteils 220 angeordnete zweite Fixieranordnung aufweisen. Die zweite Fixieranordnung ist in Figur 1a nicht zu erkennen, da sie innerhalb des zweiten Gehäuseteils 220 angeordnet ist. Die zweite Fixieranordnung ist ausgebildet, mit den mindestens zwei zweiten Leitungen 2000 eine zweite Verbindung einzugehen, beispielsweise eine formschlüssige und/oder kraftschlüssige und/oder stoffschlüssige Verbindung.

In Figur 1b ist die zweite Kontaktierungsanordnung 260 teilweise zu erkennen. Genauer gesagt sind zwei Vorsprünge der zweiten Kontaktierungsanordnung 260 zu erkennen, von denen nur der linke Vorsprung der Kontaktierungsanordnung 260 mit einem Bezugszeichen versehen ist. Die zwei Vorsprünge der zweiten Kontaktierungsanordnung 260 erstrecken sich nach vorne in Richtung des ersten Steckerteils 100, stehen, in dem gezeigten Beispiel, jedoch nicht aus dem Gehäuseteil 220 hervor oder heraus. Anders ausgedrückt, die zweite Kontaktierungsanordnung 260 ist in dem gezeigten Beispiel vollständig in dem zweiten Gehäuseteil 220 angeordnet/aufgenommen. Die zwei Vorsprünge der zweiten Kontaktierungsanordnung 260 haben eine zu den zwei Vorsprüngen der ersten Kontaktierungsanordnung 160 komplementäre Form. In dem gezeigten Beispiel hat jeder der zwei Vorsprünge der zweiten Kontaktierungsanordnung 260 eine Form, bei der zwei Stege nach vorne stehen und zwischen den zwei Stegen eine Aufnahme zur Aufnahme eines Vorsprungs der ersten Kontaktierungsanordnung 160 bilden. Anders ausgedrückt, die zwei Stege sind derart ausgebildet, dass eine zwischen den zwei Stegen existierende Lücke oder Aufnahme einen Vorsprung der ersten Kontaktierungsanordnung 160 derart (zumindest nahezu passgenau) aufnehmen kann, dass die zwei Stege jedes Vorsprungs der zweiten Kontaktierungsanordnung 260 mit dem zugehörigen Vorsprung der ersten Kontaktierungsanordnung 160 in Kontakt kommen (können). Allgemein ausgedrückt ist ein Teil der zweiten Kontaktierungsanordnung 260 ausgebildet, einen Teil der ersten Kontaktierungsanordnung 160 aufzunehmen. Eine umgekehrte Ausgestaltung der Kontaktierungsanordnung 160, 260 ist denkbar und möglich.

Das erste Gehäuseteil 120 und das das zweite Gehäuseteil 220 sind zumindest abschnittsweise lösbar ineinander einführbar. In dem Beispiel aus Figuren 1a, 1b und 1c ist beispielhaft das erste Steckerteil 100 als männliches Steckerteil und das zweite Steckerteil 200 als weibliches Steckerteil ausgebildet. Beispielhaft ist ein vorderer Abschnitt des ersten Gehäuseteils 120 in einen vorderen Abschnitt des zweiten Gehäuseteils 220 einführbar. In Figuren 1a und 1b sind die beiden Gehäuseteile 120, 220 nicht zumindest abschnittsweise ineinander eingeführt. In dem in Figur 1c ist ein vorderer Abschnitt des ersten Gehäuseteils 120 in einen vorderen Abschnitt des zweiten Gehäuseteils 220 eingeführt / eingebracht. In dem verbundenen Zustand stellt die erste Kontaktierungsanordnung 160 mit der zweiten Kontaktierungsanordnung 260 eine lösbare elektrische Verbindung her. Genauer gesagt kommen die Vorsprünge der ersten Kontaktierungsanordnung 160 in dem verbundenen Zustand zur Herstellung einer elektrischen Verbindung mit den Stegen der zweiten Kontaktierungsanordnung 260 ausreichend in Kontakt.

Das erste Steckerteil 100 weist ferner eine auf das erste Gehäuseteil 120 aufgebrachte erste Dichtanordnung 180 auf. Die erste Dichtanordnung 180 weist mindestens eine Öffnung zur Aufnahme der mindestens einen ersten elektrischen Leitung 1000 auf. In dem gezeigten Ausführungsbeispiel weist die erste Dichtanordnung 180 genau zwei Öffnungen zur Aufnahme der genau zwei ersten elektrischen Leitungen 1000 auf. Die erste Dichtanordnung 180 ist derart auf das erste Gehäuseteil 120 aufgebracht, dass sie das erste Gehäuseteil 120 und die ersten Leitungen 1000 abdichtet. Insbesondere verhindert oder verringert die erste Dichtanordnung 180 ein Eindringen von Schmutz und/oder Flüssigkeit in das erste Gehäuseteil 120. Die erste Dichtanordnung 180 ist an einem Ende des ersten Gehäuseteils 120 angeordnet, das dem Ende, an dem sich die Vorsprünge der Kontaktierungsanordnung 160 erstrecken, gegenüberliegt. Ferner kann die erste Dichtanordnung 180 mit dem ersten Gehäuseteil 120 verbunden sein.

Das zweite Steckerteil 200 weist eine auf das zweite Gehäuseteil 220 aufgebrachte zweite Dichtanordnung 280 mit mindestens zwei Öffnungen zur Aufnahme der mindestens zwei zweiten elektrischen Leitungen 2000 auf. In dem gezeigten Ausführungsbeispiel weist die zweite Dichtanordnung 280 genau vier Öffnungen zur Aufnahme der genau vier zweiten elektrischen Leitungen 2000 auf. Die zweite Dichtanordnung 280 ist derart auf das zweite Gehäuseteil 220 aufgebracht, dass sie das zweite Gehäuseteil 220 und die zweiten Leitungen 2000 abdichtet. Insbesondere verhindert oder verringert die zweite Dichtanordnung 280 ein Eindringen von Schmutz und/oder Flüssigkeit in das zweite Gehäuseteil 220. Die zweite Dichtanordnung 280 ist an einem Ende des zweiten Gehäuseteils 220 angeordnet, das dem Ende, an dem sich die Stege der Kontaktierungsanordnung 260 erstrecken, gegenüberliegt. Ferner kann die zweite Dichtanordnung 280 mit dem zweiten Gehäuseteil 220 verbunden sein.

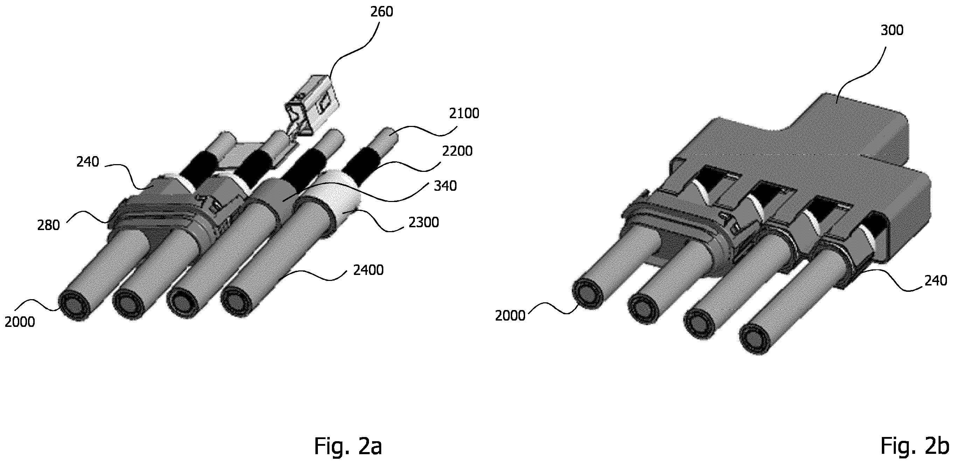

Die Figuren 2a und 2b zeigen Details des Steckerbinders 10 aus Figuren 1a, 1b und 1c, die in den Figuren 1a, 1b und 1c teilweise nicht zu erkennen sind. Insbesondere zeigen die Figuren 2a und 2b Details des zweiten Steckerteils 200, die in den Figuren 1a, 1b und 1c teilweise nicht zu erkennen sind, da sie innerhalb des zweiten Gehäuseteils 220 angeordnet sind. Die Figuren 2a und 2b zeigen diese Details beispielhaft in Bezug auf das zweite Steckerteil 200. Die beschriebenen Details können jedoch entsprechend in dem ersten Steckerteil 100 angeordnet und ausgebildet sein.

Der Aufbau der zweiten Leitungen 2000 kann in Bezug auf Figur 2a wie folgt beschrieben werden. Die ersten Leitungen 1000 können entsprechend aufgebaut sein. Jede Leitung 2000 weist beispielhaft einen leitenden Kern 2100, beispielsweise einen Lastleiter, auf. Darüber befindet sich ein Isolator 2200, der auch als innere Füllung oder innerer Füller ("inner filler") bezeichnet werden kann. Darüber befindet sich eine Kabelschirmung 2300, insbesondere ein Schirmgeflecht. Darüber befindet sich als äußerste Schicht der jeweiligen Leitung 2000 eine Kabelisolierung 2400. Das heißt, jede der Leitungen 2000 ist beispielhaft, von innen nach außen, wie folgt aufgebaut: leitender Kern 2100, Isolator 2200, Kabelschirmung 2300 und Kabelisolierung 2400. Auf der rechten zweiten Leitung 2000 von Figur 2a ist die Kabelschirmung 2300 über der Kabelisolierung 2400 zu erkennen, obwohl sie in der Leitung 2000 unter der Kabelisolierung 2400 angeordnet ist. Wie dies erreicht wird, wird nachfolgend beschrieben.

Die Kabelisolierung 2400 wird endseitig, genauer gesagt an einem Ende (=in Figur 2a dem hinteren Ende), ein Stück weit entfernt. Anschließend wird eine Unterziehhülse 340 am äußeren Ende des noch isolierten Kabelabschnitts positioniert. In Figur 2a ist die Unterziehhülse 340 nur an der zweiten Leitung 2000 von rechts zu erkennen. Bei den anderen Leitungen 2000 ist die Unterziehhülse 340 ebenfalls vorgesehen, jedoch verdeckt. Die Unterziehhülse 340 schließt insbesondere bündig mit dem noch isolierten Abschnitt der jeweiligen Leitung 2000 ab. Dann wird die Kabelschirmung 2300, insbesondere das Schirmgeflecht, die in der jeweiligen Leitung 2000 unter der Kabelisolierung 2400 angeordnet ist, über die Unterziehhülse 340 umgestülpt. Dies ist in der rechten Leitung 2000 von Figur 2a zu erkennen, bei der die Kabelschirmung 2300 um die oder über der Unterziehhülse 340 angeordnet ist. Anschließend wird eine Überziehhülse 240 auf die Kabelschirmung 2300 aufgebracht. Die Überziehhülse 240 kann über/auf die Kabelschirmung 2300 gecrimpt oder gepresst werden. Auf dies Weise entsteht ein Formschluss und/oder Kraftschluss zwischen der Überziehhülse 240 und der Kabelschirmung 2300. Durch Aufbringen der Überziehhülse 240 auf die Kabelschirmung 2300 befindet sich die Kabelschirmung 2300, insbesondere das Schirmgeflecht, zwischen der Unterziehhülse 340 und der Überziehhülse 240.

Die Überziehhülse 240 kann auf die Kabelschirmung 2300 gecrimpt / mit der Kabelschirmung 2300 vercrimpt werden, kann alternativ jedoch auch auf die Kabelschirmung 2300 gepresst / mit der Kabelschirmung 2300 verpresst werden. Durch das Vercrimpen kann eine vordefinierte Verformung der Überziehhülse 240 erreicht werden. Die jeweiligen Unterziehhülsen 340 und Überziehhülsen 240 können aus einem geeigneten leitfähigen Material, bspw. Messing, gebildet sein.

In Figuren 2a und 2b sind somit als die oder als Teil der zweiten Fixieranordnung die Überziehhülsen 240 vorgesehen und zu erkennen. Ferner können die Unterziehhülsen 340 Teil der zweiten Fixieranordnung sein. Anders ausgedrückt die zweite Fixieranordnung 240 kann die Unterziehülsen 340 und die Überziehhülsen 240 aufweisen. Die zweite Fixieranordnung weist somit in Figuren 2a und 2b mindestens zwei zweite hülsenförmige Abschnitte auf, die in Bezug auf die Figuren 2a und 2b beispielhaft als Überziehhülsen 240 ausgebildet sind. In dem Beispiel aus Figuren 2a und 2b sind beispielhaft genau vier hülsenförmige Abschnitte (Überziehhülsen 240) vorgesehen, d. h. für jede der vier Leitungen 2000 ein hülsenförmiger Abschnitt, von denen jedoch nur zwei auf der linken Seite gezeigt sind. Die zwei weiteren hülsenförmigen Abschnitte sind nicht gezeigt, damit erkennbar ist, dass auf den Leitungen 2000 jeweils eine Unterziehhülse 340 und die über die Unterziehhülse 340 gestülpte Kabelschirmung 2300 angeordnet sind. Die zweiten hülsenförmigen Abschnitte sind ausgebildet, über die jeweils auf die vier zweiten Leitungen 2000 aufgebrachten zweiten Unterziehhülsen 340 die zweite, beispielsweise formschlüssige, Verbindung einzugehen. Die zweite, beispielsweise formschlüssige, Verbindung kann als eine Crimpverbindung zwischen den hülsenförmigen Abschnitten, der Kabelschirmung 2300 und den Unterziehhülsen 340 gebildet sein. Das in Figur 2a nicht gezeigte zweite Gehäuseteil 220 kann beispielsweise über einen oder mehrere innere Anschläge oder eine oder mehrere innere Schultern an den hülsenförmigen Abschnitten anschlagen oder anliegen. Dadurch kann entlang einer Längsachse des zweiten Steckerteils 200 das zweite Gehäuseteil 220 gegen eine ungewünschte Bewegung fixiert oder gesichert sein. Zusätzlich oder alternativ kann die zweite Dichtanordnung 280 die zweite Fixieranordnung und das zweite Gehäuseteil 220 verbinden. Zusätzlich oder alternativ können die in ihrem Querschnitt beispielhaft eckigen Überziehhülsen 240 zumindest teilweise formschlüssig, beispielsweise gegen eine Rotation, in einer entsprechenden Ausnehmung des zweiten Gehäuseteils 220 gehalten werden.

Statt einer formschlüssigen Verbindung ist für die zweite Verbindung auch eine kraftschlüssige Verbindung oder eine Kombination aus formschlüssiger und kraftschlüssiger Verbindung denkbar. Alternativ ist als eine stoffschlüssige Verbindung eine Schweißverbindung denkbar. Die erste Fixieranordnung in dem ersten Gehäuseteil 120 wird der Einfachheit halber nicht weiter beschrieben, kann jedoch entsprechend der zweiten Fixieranordnung ausgebildet sein.

Ferner ist in Figur 2a die zweite Kontaktierungsanordnung 260 zu erkennen. Die zweite Kontaktierungsanordnung 260 weist ein plattenförmiges Element auf, welches mit zwei Leitungen 2000 der vier Leitungen 2000, genauer gesagt dem leitenden Kern 2100 der zwei Leitungen 2000, in elektrischem Kontakt steht. In Figur 2a ist aus Darstellungsgründen nur eine Kontaktierungsanordnung 260 für die zwei linken Leitungen 2000 gezeigt. Mit den zwei weiteren Leitungen 2000 der vier Leitungen, genauer gesagt dem leitenden Kern 2100 der zwei weiteren Leitungen 2000, steht ebenfalls ein plattenförmiges Element einer weiteren zweiten Kontaktierungsanordnung in Kontakt. Diese weitere Kontaktierungsanordnung ist in Figur 2a jedoch nicht gezeigt. Ferner weist die Kontaktierungsanordnung 260 einen Vorsprung auf, der sich beispielhaft von der rechten der beiden linken Leitungen 2000 nach vorne erstreckt. Der Vorsprung dient zur Verbindung mit dem entsprechenden Vorsprung der ersten Kontaktierungsanordnung 160 des ersten Steckerteils 100.

Die erste Kontaktierungsanordnung 160 in dem ersten Gehäuseteil wird der Einfachheit halber nicht genauer beschrieben, kann jedoch entsprechend der zweiten Kontaktierungsanordnung 260 ausgebildet sein.

In Figur 2b ist eine Abschirmung 300 in dem zweiten Steckerteil 200 zu erkennen. Die Abschirmung 300 ist in dem zweiten Gehäuseteil 220 angeordnet und schirmt die zweite Kontaktierungsanordnung 260 elektromagnetisch ab. Ferner schirmt die Abschirmung 300 die abisolierten Enden der zweiten elektrischen Leitungen 2000 ab. In dem ersten Steckerteil 100 kann eine entsprechende Abschirmung vorgesehen sein.

Die Abschirmung 300 kann neben der jeweiligen Kabelschirmung 2300, der jeweiligen Unterziehhülse 340 und der jeweiligen Überziehhülse 240 als Bestandteil einer Schirmungsanordnung angesehen werden. Die Abschirmung 300 kann beispielsweise mehrteilig ausgebildet sein, insbesondere zweiteilig mit einer oberen Hälfte und einer zumindest nahezu ähnlich oder gleich geformten unteren Hälfte. Die Abschirmung 300 steht im Beispiel aus Figur 2b über federnde Finger, insbesondere direkt, in elektrisch leitendem Kontakt mit den Überziehhülsen 240 der Leitungen 2000. Die Finger der Abschirmung 300 können federnd auf den/die Überziehhülsen 240 vorgespannt sein. Die Abschirmung 300 stellt somit eine unmittelbare Verbindung zu der Kabelschirmung 2300 bereit. Die Abschirmung 300 wird beispielhaft flächig insbesondere über das komplette zweite Steckerteil 200 nach vorne in den Steckbereich zwischen dem ersten Steckerteil 100 und dem zweiten Steckerteil 200 übergeben. Die Abschirmung 300 kann blechförmig oder aus einem Blech gebildet sein, das gute oder überdurchschnittliche EMV-Eigenschaften aufweist.

Die Schirmungsanordnung kann über das komplette HV-System verbunden sein. Zudem kann die Schirmungsanordnung im Fahrzeug verbunden sein, was in einer Verbindung zu einem "ISO-Wächter" endet. Der ISO-Wächter ist ein Isolationswächter, der Isolationsfehler feststellen kann. Generell ist die Schirmungsanordnung beispielsweise über einen Anschluss an ein Gehäuse einer Fahrzeugkomponente mit Masse verbunden.

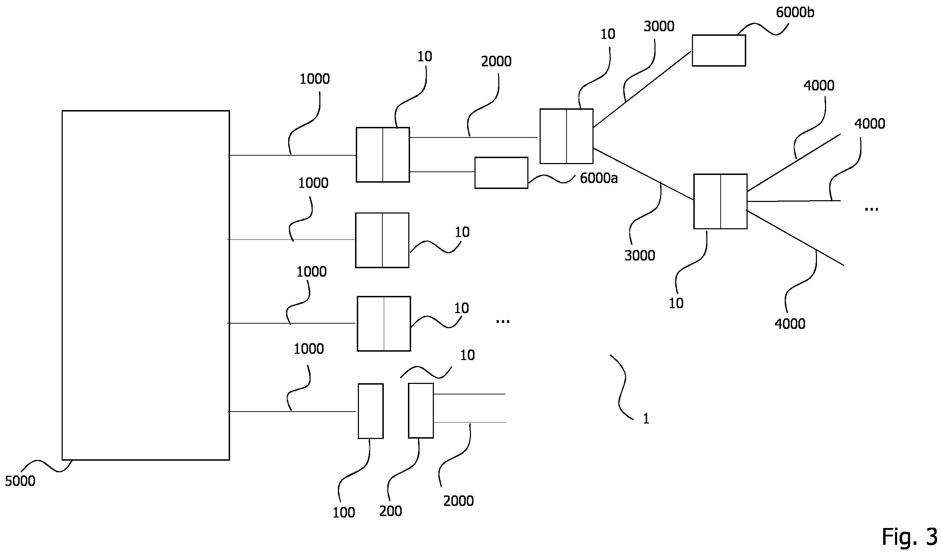

Unter Verwendung des Steckverbinders 10 kann ein Leitungssatz 1 für ein Fahrzeug bereitgestellt werden. Ein beispielhafter Leitungssatz 1 ist in Figur 3 dargestellt. Der Leitungssatz 1 weist einen Hochvolt-Speicher 5000 auf als ein Beispiel für mindestens eine in dem Leitungssatz 1 angeordnete oder mit dem Leistungssatz 1 verbundene Hochvolt-Energieversorgung. Anstelle des Hochvolt-Speichers 5000 können auch andere Energieversorgungen oder Energiequellen angeordnet sein, beispielsweise ein Hochvolt-Akkumulator oder eine Hochvolt-Batterie oder ähnliches.

Die im Folgenden referenzierten Leitungen sind ferner beispielhaft als geschirmte Hochvolt-Leitungen ausgebildet. Der Leitungssatz 1 weist mehrere in dem Leitungssatz 1 angeordnete oder mit dem Leitungssatz 1 verbundene elektrische und/oder elektronische Komponenten 6000a, 6000b auf. Beispielhaft sind in Figur 3 zwei solcher elektrischen und/oder elektronischen Komponenten 6000a, 6000b dargestellt, um zu illustrieren, dass eine Vielzahl von elektrischen Komponenten 6000a, 6000b vorgesehen sein kann. Bei den elektrischen und/oder elektronischen Komponenten 6000a, 6000b kann es sich um Antriebe, Aktoren, Sensoren, Displays, Steuergeräte usw. handeln. Der Kürze halber werden die elektrischen und/oder elektronischen Komponenten 6000a, 6000b im Folgenden nur als elektrische Komponenten 6000a, 6000b bezeichnet. Bei den elektrischen Komponenten 6000a, 6000b kann es sich beispielsweise um Komponenten von Klima- oder Heizvorrichtungen oder On-Board-Chargern handeln. Alle in Figur 3 verwendeten und dargestellten Steckverbinder 10 sind grundsätzlich so aufgebaut wie in Bezug auf die Figuren 1a bis 2b beschrieben, weisen jedoch eine abweichende Anzahl von Eingangsleitungen und Ausgangsleitungen auf. Der grundsätzliche Aufbau und die grundsätzliche Funktion werden hierdurch jedoch nicht beeinflusst.

In dem gezeigten Beispiel sind beispielhaft vier erste Leitungen 1000 mit dem Hochvolt-Speicher 5000 verbunden. Die vier ersten Leitungen sind jeweils mit einem Steckverbinder 10 einer ersten Stufe einer beispielhaften Kaskadierung des Leitungssatzes 1 ausgebildet. Genauer gesagt sind die vier ersten Leitungen 1000 jeweils mit einem ersten Steckerteil 100 gemäß Figuren 1a bis 2b verbunden. Drei der vier Steckverbinder 10 der ersten Stufe sind beispielhaft in einem verbundenen Zustand wie er in Figur 1c gezeigt ist. Der unterste der vier Steckverbinder 10 der ersten Stufe ist beispielhaft in einem unverbundenen / getrennten Zustand, wie er in Figuren 1a und 1b gezeigt ist. In dem unverbundenen Zustand sind das erste Steckerteil 100 und das zweite Steckerteil 200 getrennt / unverbunden. Daher besteht keine elektrisch leitende Verbindung zwischen der mit dem ersten Steckerteil 100 verbundenen ersten Leitung 1000 und beispielhaft zwei mit dem zweiten Steckerteil 200 verbundenen zweiten Leitungen 2000.

Der obere Steckverbinder 10 der ersten Stufe der beispielhaften Kaskadierung des Leitungssatzes 1 ist in einem verbundenen Zustand. Daher besteht eine elektrisch leitende Verbindung zwischen der mit dem ersten Steckerteil 100 verbundenen ersten Leitung 1000 und den mit dem zweiten Steckerteil 20 verbundenen zwei zweiten Leitungen 2000. Eine der zwei zweiten Leitungen 2000 führt zu einer elektrischen Komponente 6000a. Auf diese Weise ist die elektrische Komponente 6000a elektrisch mit dem Hochvolt-Speicher 5000 verbunden und kann von dem Hochvolt-Speicher 5000 mit Strom versorgt werden. Durch einfache Trennung des ersten und des zweiten Steckerteils 10, 20 des oberen Steckverbinders 10 der ersten Stufe kann die elektrische Verbindung zwischen dem Hochvolt-Speicher 5000 und der elektrischen Komponente 6000a unterbrochen / getrennt werden. Durch lösbares Wiederverbinden des ersten und des zweiten Steckerteils 100, 200 des oberen Steckverbinders 10 der ersten Stufe kann die elektrische Verbindung flexibel wiederhergestellt werden.

Die oberste zweite Leitung 2000 wird aus dem oberen Steckerbinder 10 der ersten Stufe herausgeführt und in einen nachgeschalteten weiteren Steckverbinder 10 einer zweiten Stufe hineingeführt. Auch dieser Steckverbinder 10 der zweiten Stufe ist, bis auf die beispielhafte Anzahl von Leitungen, ausgebildet wie der Steckerbinder 10 aus Figuren 1a bis 2b und befindet sich beispielhaft in einem verbundenen Zustand gemäß Figur 1c. Die in diesen Steckverbinder 10 der zweiten Stufe hineingeführte Leitung 2000 fungiert in Bezug auf diesen Steckverbinder 10 somit als erste Leitung (Eingangsleitung) gemäß Figuren 1a bis 2b. Aus dem Steckverbinder 10 der zweiten Stufe werden wiederum zwei dritte Leitungen 3000 geführt, die bezüglich dieses Steckverbinders 10 wiederum als zweite Leitungen (Ausgangsleitungen) gemäß Figuren 1a bis 2b fungieren. Die obere dieser dritten Leitungen 3000 wird beispielhaft in eine elektrische Komponente 6000b geführt. Die elektrische Komponente 6000b kann auf diese Weise von dem Hochvolt-Speicher 5000 mit Strom versorgt werden. Durch einfache Trennung der Steckerteile 100, 200 eines oder beider der Steckerbinder 10 auf dem Weg von dem Hochvolt-Speicher 5000 zu der elektrischen Komponente 6000b kann die Stromversorgung getrennt werden.

Die untere Leitung 3000 der Leitungen 3000 aus dem weiteren Steckverbinder 10 der zweiten Stufe wird beispielhaft zu noch einem weiteren Steckverbinder 10 einer dritten Stufe der beispielhaften Kaskadierung des Leitungssatzes 1 geführt. Aus diesem Steckverbinder 10 der dritten Stufe werden ausgangsseitig beispielhaft drei vierte Leitungen 4000 herausgeführt.

Die in Bezug auf Figur 3 beschriebene Kaskadierung von Steckverbindern 10, Leitungen 1000, 2000, 3000, 4000 und elektrischen Komponenten 6000a, 6000b kann beliebig angepasst und/oder fortgeführt werden. Insbesondere kann ein mittels der beschriebenen Komponenten gebildeter Leitungssatz 1 flexibel umgebildet oder arrangiert werden, indem Steckerteile 100, 200 eines Steckverbinders 10 mit zugehörigen/komplementären Steckerteilen 100, 200 eines anderen Steckverbinders 10 verbunden werden. Beispielsweise könnte das zweite Steckerteil 200 des noch weiteren Steckverbinders 10 der dritten Stufe mit einem ersten Steckerteil 100 des linken unteren Steckverbinders 10 der ersten Stufe verbunden werden. Auf diese Weise würden aus dem neu gebildeten linken unteren Steckverbinder 10 der ersten Stufe nun drei Leitungen 4000 herausgeführt, die mit dem zweiten Steckerteil 200 fest verbunden sind. Eine flexible Anpassung des Leitungssatzes 1 wird dadurch ermöglicht. Ferner kann der Automatisierungsgrad zur Erstellung und/oder Anpassung des Leitungssatzes 1 erhöht werden. Feste Verbindungen können zudem durch lösbare Verbindungen ersetzt werden. Es kommt ferner zu weniger Varianten im Kabelsatz/Leitungssatz 1 durch Nutzung des gleichen Steckerverbinders 10 bspw. auch zur Verbindung an einer der Komponenten 6000a, 600b.

Zudem ist der Leitungssatz durch die Lösbarkeit der Verbindung einfacher zu verlegen. Denn die durch Trennen der Verbindung entstehenden Teilleitungssätze sind jeweils leichter als der Gesamtleitungssatz und lassen sich sowohl manuell, aber insbesondere automatisiert besser handhaben.

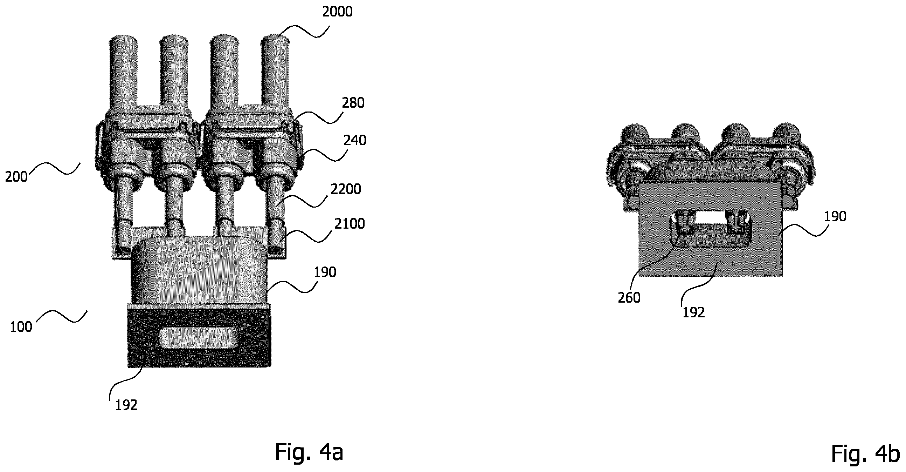

Figur 4a zeigt Details einer Variante des Steckverbinders 10 aus Figur 1a. Das zweite Steckerteil 200 des Steckverbinders 10 aus Figur 4a entspricht dem zweiten Steckerteil 200 des Steckerbinders 10 aus Figur 1a. In Figur 4a ist jedoch das zweite Gehäuseteil 220 nicht gezeigt, um eine Ansicht von Details des zweiten Steckerteils 200 zu ermöglichen. Auf eine Wiederholung der Beschreibung der übereinstimmenden Elemente der zweiten Steckerteile aus Figuren 1a und 4a wird nachfolgend verzichtet.

Im Gegensatz zu der Ausgestaltung aus Figur 1a weist das erste Steckerteil 100 aus Figur 4a ein Kopfteil 190 auf. Das Kopfteil 190 ist ausgebildet, zumindest abschnittsweise in einem Gehäuse, beispielsweise in zumindest einem Abschnitt des ersten 120 und/oder des zweiten Gehäuseteils 220 aufgenommen zu sein/werden. Das erste Kopfteil 190 weist eine zumindest annähernd plane/ebene Anlagefläche 192 auf. Die Anlagefläche 192 verläuft beispielhaft entlang einem Umfang des Kopfteils 190. Über die Anlagefläche 192 kann das erste Steckerteil 100 an einer elektrischen Komponente, insbesondere an einer Hochvolt-Komponente, anliegen und dort befestigt, beispielsweise angeschraubt, werden.

Figur 4b zeigt eine weitere Ansicht der Variante aus Figur 4a. In der Ansicht aus Figur 4b ist zu erkennen, wie die zweite Kontaktierungsanordnung 260 des zweiten Steckerteils 200 in ein Inneres (einen Innenraum) des Kopfteils 190 hineinragt. Nicht gezeigt in Figuren 4a und 4b ist eine erste Kontaktierungsanordnung des ersten Steckerteils 100, die mit der zweiten Kontaktierungsanordnung 260, wie in Bezug auf die Figuren 1a bis 2b beschrieben, verbunden werden kann. In dem gezeigten Beispiel hat jeder der zwei Vorsprünge der zweiten Kontaktierungsanordnung 260 eine Form, bei der zwei Stege nach vorne stehen und zwischen den zwei Stegen eine Aufnahme zur Aufnahme eines Vorsprungs der ersten Kontaktierungsanordnung 160 bilden. Die zweite Kontaktierungsanordnung 260 weist somit beispielhaft zwei weibliche Aufnahmen auf. Anders ausgedrückt, die zwei Stege sind jeweils derart ausgebildet, dass eine zwischen den zwei Stegen existierende Lücke oder Aufnahme einen Vorsprung der ersten Kontaktierungsanordnung derart (zumindest nahezu passgenau) aufnehmen kann, dass die zwei Stege jedes Vorsprungs der zweiten Kontaktierungsanordnung 260 mit dem zugehörigen Vorsprung der ersten Kontaktierungsanordnung 160 in Kontakt kommen (können). Die erste Kontaktierungsanordnung bildet somit beispielhaft zu den weiblichen Aufnahmen jeweils passende männliche Vorsprünge. Allgemein ausgedrückt ist ein Teil der zweiten Kontaktierungsanordnung 260 ausgebildet, einen Teil der ersten Kontaktierungsanordnung aufzunehmen. Eine umgekehrte Ausgestaltung der Kontaktierungsanordnungen ist denkbar und möglich. Ebenfalls nicht gezeigt in Figur 4a und 4b sind erste Leitungen, die über die erste Kontaktierungsanordnung kontaktiert werden können. Die ersten Leitungen können sich aus der elektrischen Komponente in das Kopfteil 190 erstrecken.

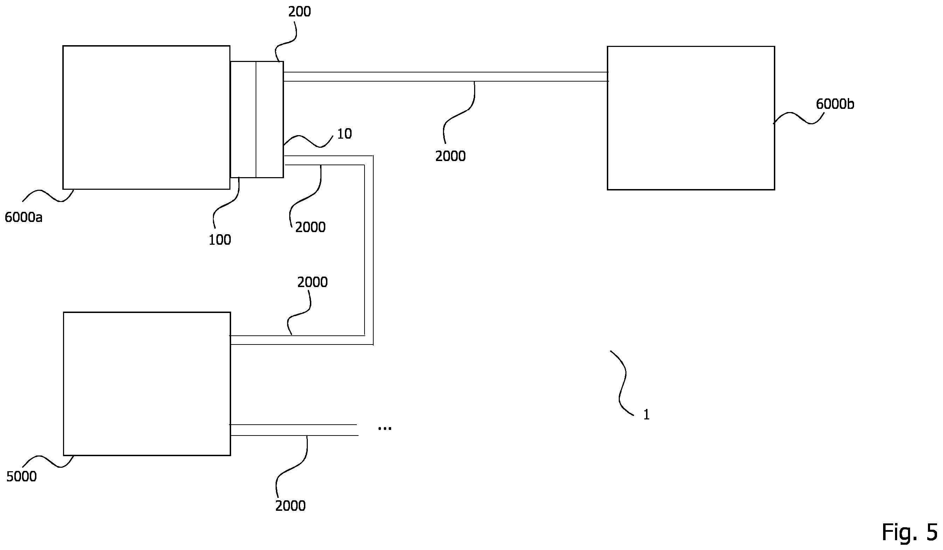

Figur 5 zeigt ein Ausführungsbeispiel eines Leitungssatzes 1 mit einem Steckverbinder 10 aus Figuren 4a und 4b. Auch wenn in dem Ausführungsbeispiel aus Figur 5 nur ein Steckverbinder 10 aus Figuren 4a und 4b gezeigt ist, können mehrere solcher Steckverbinder in dem Leitungssatz 1 angeordnet sein. Zusätzlich oder alternativ können ein oder mehrere Steckverbinder 10 aus Figuren 1a bis 1c in dem Leitungssatz 1 aus Figur 5 angeordnet sein.

In dem Leitungssatz 1 ist ein Hochvolt-Speicher 500 vorgesehen. Zudem sind beispielhaft zwei elektrische Komponenten 6000a, 6000b vorgesehen, die insbesondere als Hochvolt-Komponenten ausgebildet sein können. Wie durch die drei Punkte in Figur 5 angedeutet, kann der Leitungssatz 1 noch fortgesetzt werden und beispielsweise mindestens eine weitere elektrische Komponente, insbesondere mindestens eine weitere Hochvolt-Komponente, aufweisen. Die elektrischen Komponenten 6000a, 6000b können beispielsweise als Klimakompressor, On-Board-Charger, elektrischer Zuheizer oder Verteiler (z.B. Hochvolt-Verteiler) ausgebildet sein.

Wie in Figur 5 zu erkennen, führen zwei zweite Leitungen 2000 aus dem Hochvolt-Speicher 5000 zu einer elektrischen Komponente 6000a. Diese zwei zweiten Leitungen 2000 werden in den Steckverbinder 10 geführt, genauer gesagt in das zweite Steckerteil 200 des Steckverbinders 10. Zudem führen zwei zweite Leitungen 2000 von der anderen elektrischen Komponente 6000b in den Steckverbinder 10, genauer gesagt in das zweite Steckerteil 200 des Steckverbinders 10. Somit führen vier zweite Leitungen in das zweite Steckerteil 200. Das erste Steckerteil 100 ist über das Kopfteil 190 an der Komponente 6000a angeordnet. Dabei liegt die Anlagefläche 192 des Kopfteils 190 an der Komponente 6000a an. Zwei erste Leitungen aus der Komponente 6000a werden in das erste Steckerteil 100 geführt und kontaktieren dort eine erste Kontaktierungsanordnung. Bei den zwei ersten Leitungen kann es sich beispielsweise und eine Minus- und eine Plusleitung handeln. Durch Verbindung der ersten Kontaktierungsanordnung und der zweiten Kontaktierungsanordnung 260 wird eine Verbindung zwischen einer der ersten elektrischen Leitungen und den beiden zweiten elektrischen Leitungen 2000 aus dem Hochvolt-Speicher 5000 und eine Verbindung zwischen einer anderen der ersten elektrischen Leitungen und den beiden zweiten elektrischen Leitungen 2000 aus der Komponente 6000b hergestellt.

Auf diese Weise wird eine flexible Verbindung zwischen der elektrischen Komponente 6000a und dem Hochvolt-Speicher 5000 sowie zwischen der elektrischen Komponente 6000a und der elektrischen Komponente 6000b hergestellt. Sollen beispielsweise die elektrische Komponente 6000b und der Hochvolt-Speicher 5000 mit einer anderen, nicht gezeigten elektrischen Komponente in dem Leitungssatz 1 verbunden werden, so kann die in Figur 5 gezeigte Verbindung gelöst werden, indem das zweite Steckerteil 200 von dem ersten Steckerteil 100 gelöst wird. Stattdessen wird das zweite Steckerteil mit einem korrespondierenden ersten Steckerteil 100 verbunden, welches beispielsweise ebenfalls über ein Kopfteil an einer elektrischen Komponente angeordnet ist. Auf diese Weise kann der Leitungssatz 1 flexibel angepasst und umgestaltet werden.

Außerdem kann man durch Anordnung eines der Steckerteile der Steckverbinder und dadurch der Steckverbinder (Steckersplices) an einer oder mehreren elektrischen Komponenten die Anzahl von nicht an solchen Gehäusen angeordneten Steckverbindern (In-Line-Splices) im Leitungssatz und Bordnetz verringern. Gewisse Anschlussstellen an den Gehäusen der elektrischen Komponenten werden in Leitungssätzen und Bordnetzen im Normalfall ohnehin benötigt und dies lässt sich vorteilhaft ausnutzen, indem man an diesen Stellen zumindest teilweise direkt den Steckverbinder (den Splice) anbringt oder integriert. Dadurch lassen sich in-Line-Splices in Leitungssätzen und Bordnetzen noch weiter reduzieren.

Es versteht sich, dass an Stelle von zwei ersten Leitungen aus der elektrischen Komponente 6000a in das erste Steckerteil 100 und vier zweiten Leitungen 2000 in das zweite Steckerteil 200, auch jeweils eine andere Anzahl von ersten und/oder zweiten Leitungen in die Steckerteile 100, 200 führen kann. Gemäß einer Ausgestaltungsmöglichkeit kann in dem (ersten und/oder zweiten) Steckerteil, welches das Kopfteil umfasst, also unmittelbar/direkt an der elektrischen Komponente angeordnet/angebracht ist, eine Aufteilung/Aufzweigung der Leitungen (zwischen den ersten und zweiten Leitungen) erfolgen. Beispielsweise können zwei zweite Leitungen 2000 beispielsweise von einem Hochvolt-Speicher 5000 in das zweite Steckerteil führen und in dem Steckverbinder 10 beispielsweise auf vier erste Leitungen aufgeteilt werden, die dann über das Kopfteil 190 in eine elektrische Komponente führen.

Ebenso ist es denkbar, keine Aufteilung oder Aufzweigung in dem Steckverbinder 10 vorzusehen, so dass beispielsweise eine Anzahl von zweiten Leitungen 2000, beispielsweise vier zweite Leitungen 2000, in das zweite Steckerteil 200 führt und eine gleiche Anzahl an ersten Leitungen, beispielsweise vier erste Leitungen, aus dem Kopfteil 190 in die elektrische Komponente führen. Demgemäß ist es gemäß einer Weiterbildung der Variante aus Figuren 4a und 4b möglich, dass innerhalb der elektrischen Komponente (d. h. innerhalb des Gehäuses der elektrischen Komponente) eine nachgeschaltete/nachgelagerte Aufteilung/Aufzweigung (ein Splicing) erfolgt.

Da die Verbindungen zwischen dem jeweiligen ersten Steckerteil 100 und dem jeweiligen zweiten Steckerteil 200 lösbar sind, kann der Leitungssatz und die darin gebildeten Verbindungen zwischen beispielsweise einem Hochvolt-Speicher 5000 und elektrischen Komponenten 6000a, 6000b, flexibel angepasst werden.

## Patentansprüche

1. Steckverbinder (10) zur Verbindung von Leitungen (1000, 2000) in einem Leitungssatz (1) für ein Fahrzeug, wobei der Steckverbinder (10) aufweist:
ein erstes Steckerteil (100), wobei das erste Steckerteil (100) aufweist:
ein erstes Gehäuseteil (120); und
eine innerhalb des ersten Gehäuseteils (120) angeordnete erste Kontaktierungsanordnung (160), die ausgebildet ist, eine elektrische Kontaktierung mit mindestens einer ersten elektrischen Leitung (1000) herzustellen;
ein zweites Steckerteil (200), wobei das zweite Steckerteil (200) aufweist:
ein zweites Gehäuseteil (220); und
eine innerhalb des zweiten Gehäuseteils (220) angeordnete zweite Kontaktierungsanordnung (260), die ausgebildet ist, eine elektrische Kontaktierung mit mindestens zwei zweiten elektrischen Leitungen (2000) herzustellen;
wobei das erste Gehäuseteil (120) und das zweite Gehäuseteil (220) zumindest abschnittsweise derart lösbar ineinander einführbar sind, dass die erste Kontaktierungsanordnung (160) mit der zweiten Kontaktierungsanordnung (260) eine lösbare elektrische Verbindung herstellt.

2. Steckverbinder (10) nach Anspruch 1, wobei das erste Steckerteil (100) als männliches Steckerteil ausgebildet ist und das zweite Steckerteil (200) als weibliches Steckerteil ausgebildet ist oder umgekehrt.

3. Steckverbinder (10) nach Anspruch 1 oder 2, wobei der Steckverbinder (10) ferner aufweist:
eine innerhalb des ersten Gehäuseteils (120) angeordnete erste Fixieranordnung, die ausgebildet ist, mit der mindestens einen ersten elektrischen Leitung (1000) eine erste Verbindung einzugehen; und/oder
eine innerhalb des zweiten Gehäuseteils (220) angeordnete zweite Fixieranordnung, die ausgebildet ist, mit den mindestens zwei zweiten elektrischen Leitungen (2000) eine zweite Verbindung einzugehen.

4. Steckverbinder (10) nach Anspruch 3, wobei
die erste Verbindung eine formschlüssige und/oder kraftschlüssige und/oder stoffschlüssige Verbindung aufweist oder als eine formschlüssige und/oder kraftschlüssige und/oder stoffschlüssige Verbindung ausgebildet ist, beispielsweise eine Crimpverbindung, Pressverbindung oder Schweißverbindung; und/oder
die zweite Verbindung eine formschlüssige und/oder kraftschlüssige und/oder stoffschlüssige Verbindung aufweist oder als eine formschlüssige und/oder kraftschlüssige und/oder stoffschlüssige Verbindung ausgebildet ist, beispielsweise eine Crimpverbindung, Pressverbindung oder Schweißverbindung.

5. Steckverbinder (10) nach Anspruch 3 oder 4, wobei die erste Fixieranordnung mindestens einen ersten hülsenförmigen Abschnitt aufweist, der ausgebildet ist, über eine auf die mindestens eine erste elektrische Leitung (1000) aufgebrachte mindestens eine erste Unterziehhülse die erste Verbindung einzugehen, und/oder wobei die zweite Fixieranordnung mindestens zwei zweite hülsenförmige Abschnitte (240) aufweist, die ausgebildet sind, über jeweils eine auf die mindestens zwei zweiten elektrischen Leitungen (2000) aufgebrachte mindestens zwei zweite Unterziehhülsen (340) die zweite Verbindung einzugehen.

6. Steckverbinder (10) nach einem der Ansprüche 1 bis 5, ferner aufweisend eine auf das erste Gehäuseteil (120) aufgebrachte erste Dichtanordnung (180) mit mindestens einer Öffnung zur Aufnahme der mindestens einen ersten elektrischen Leitung (1000) und/oder eine auf das zweite Gehäuseteil (220) aufgebrachte zweite Dichtanordnung (280) mit mindestens zwei Öffnungen zur Aufnahme der mindestens zwei zweiten elektrischen Leitungen (2000).

7. Steckverbinder (10) nach einem der Ansprüche 1 bis 6, ferner aufweisend eine in dem ersten Gehäuseteil (120) angeordnete erste Schirmungsanordnung und/oder eine in dem zweiten Gehäuseteil (220) angeordnete zweite Schirmungsanordnung (300, 2300).

8. Steckverbinder (10) nach einem der Ansprüche 1 bis 7, wobei das erste Steckerteil und/oder das zweite Steckerteil ein Kopfteil (190) aufweist oder bildet, das ausgebildet ist, mit einer elektrischen Komponente (6000a), insbesondere über eine Anlagefläche (192), verbunden zu werden.

9. Leitungssatz (1) für ein Fahrzeug, aufweisend:
mindestens eine erste elektrische Leitung (1000);
mindestens zwei zweite elektrische Leitungen (2000);
mindestens einen Steckverbinder (10) nach einem der Ansprüche 1 bis 8.

10. Leitungssatz (1) nach Anspruch 9, wobei das erste Steckerteil (100) des mindestens einen Steckverbinders (10) mit der mindestens einen ersten elektrischen Leitung (1000), beispielsweise formschlüssig und/oder kraftschlüssig und/oder stoffschlüssig, verbunden ist und das zweite Steckerteil (200) des mindestens einen Steckverbinders (10) mit den mindestens zwei elektrischen Leitungen (2000), beispielsweise formschlüssig und/oder kraftschlüssig und/oder stoffschlüssig, verbunden ist.

11. Leitungssatz (1) nach Anspruch 9 oder 10, wobei die mindestens eine erste elektrische Leitung (1000) als mindestens eine ungeschirmte oder geschirmte Hochvolt-Leitung ausgebildet ist und/oder die mindestens zwei zweiten elektrischen Leitungen (2000) als mindestens zwei ungeschirmte oder geschirmte Hochvolt-Leitungen ausgebildet sind.

12. Leitungssatz (1) nach einem der Ansprüche 9 bis 11, ferner aufweisend:
mindestens eine mit dem Leistungssatz (1) verbundene Hochvolt-Energiequelle oder Hochvolt-Energieversorgung, beispielsweise einen Hochvolt-Speicher (5000) oder eine Hochvolt-Batterie oder einen Hochvolt-Akkumulator; und
mehrere mit dem Leitungssatz (1) verbundene elektrische und/oder elektronische Komponenten (6000a, 6000b).

13. Leitungssatz (1) nach einem der Ansprüche 9 bis 12, wobei eine Vielzahl von Steckverbindern (10) vorgesehen ist und die ersten Steckerteile (100) und die zweiten Steckerteile (200) der Vielzahl von Steckverbinder (10) jeweils lösbar miteinander verbindbar sind.

14. Leitungssatz (1) nach Anspruch 13, wobei mehrere der Vielzahl von Steckverbindern (10) eine abweichende Anzahl von Eingangsleitungen und Ausgangsleitungen aufweisen.

15. Leitungssatz nach Anspruch 14, wobei ein Steckerteil (100, 200) eines ersten der mehreren der Vielzahl von Steckverbindern (10) mit einem zugehörigen Gegensteckerteil eines zweiten der mehreren der Vielzahl von Steckverbindern (10) und einem zugehörigen Gegensteckerteil eines dritten der mehreren der Vielzahl von Steckverbindern (10) verbindbar ist.
